# EUROPÄISCHE PATENTSCHRIFT

(11) **EP 0 463 525 B1**
(45) Veröffentlichungstag und Bekanntmachung des Hinweises auf die Patenterteilung: **13.05.1998**
(21) Anmeldenummer: 91109859.8
(22) Anmeldetag: 15.06.1991
(51) Int. Cl.: C08F 2/06

(54) **Verfahren zur Herstellung von Polymerisaten aus olefinisch ungesättigten Monomeren sowie Lösungen von Polymerisaten aus olefinisch ungesättigten Monomeren**
Process for the manufacture of polymers of olefinically unsaturated monomers and solutions of polymers of olefinically unsaturated monomers
Procédé pour la préparation des polymères de monomères à insaturations oléfiniques et solutions de polymères de monomères à insaturations oléfiniques

(30) Priorität: 29.06.1990 DE 4020767
(43) Veröffentlichungstag der Anmeldung: 02.01.1992
(73) Patentinhaber: BASF Aktiengesellschaft, 67063 Ludwigshafen (DE)
(72) Erfinder: Rehmer, Gerd, Dr., W-6711 Beindersheim (DE); Barwich, Juergen, Dr., W-6730 Neustadt (DE); Auchter, Gerhard, Dr., W-6702 Bad Duerkheim (DE)

(56) Entgegenhaltungen:
- US-A- 2 326 326

## Beschreibung

Die vorliegende Erfindung betrifft ein Verfahren zur Herstellung von Polymerisaten aus olefinisch ungesättigten Monomeren sowie Lösungen von Polymerisaten aus olefinisch ungesättigten Monomeren, dadurch gekennzeichnet, daß man die olefinisch ungesättigten Monomeren in Gegenwart von radikalbildenden Initiatoren in Lösung bei ansonsten vorgegebenen Polymerisationsbedingungen so polymerisiert, daß man ein Lösungsmittel und/oder einen flüssigen Teil einer oder mehrerer Reaktionskomponenten des Polymerisationsansatzes vorlegt, auf die Polymerisationstemperatur erhitzt und unter Aufrechterhaltung oder Start der Polymerisation über wenigstens einen Zulauf einen Teil oder die Gesamtmenge der zu polymerisierenden Monomeren dem in Bewegung gehaltenen vorgelegten Teil des Polymerisationsansatzes kontinuierlich so zuführt, daß sich die Austrittsöffnung des wenigstens einen Zulaufs unterhalb der Oberfläche des vorgelegten flüssigen Teils des Polymerisationsansatzes befindet.

Polymerisate aus olefinisch ungesättigten Monomeren sowie Lösungen von Polymerisaten aus olefinisch ungesättigten Monomeren, die dadurch erhältlich sind, daß man die olefinisch ungesättigten Monomeren in Gegenwart von radikalbildenden Initiatoren in Lösung so polymerisiert, daß man einen flüssigen Teil des Polymerisationsansatzes vorlegt und einen Teil oder die Gesamtmenge der zu polymerisierenden Monomeren dem in Bewegung gehaltenen vorgelegten Teil des Polymerisationsansatzes über wenigstens einen Zulauf kontinuierlich zuführt, sind bekannt (z.B. Beispiel 1 der älteren Anmeldung P 3917881.1) und werden beispielsweise als Basis für Haftklebstoffe verwendet, wobei sich die Austrittsöffnung des wenigstens einen Zulaufs in an sich bekannter Weise oberhalb der Oberfläche des vorgelegten flüssigen Teils des Polymerisationsansatzes befindet. Nachteilig an den so erhältlichen Polymerisaten und Lösungen von Polymerisaten ist, daß die Bestandteile der radikalbildenden Initiatoren, deren eingesetzte Menge bei ansonsten vorgegebenen Polymerisationsbedingungen das mittlere Molekulargewicht des Polymerisats bestimmt, wobei mit zunehmender Menge an eingesetztem Initiator das mittlere Molekulargewicht des Polymerisats abnimmt, unverändert oder chemisch abgewandelt in freier Form oder chemisch oder physikalisch gebunden im Polymerisat oder in der Lösung des Polymerisats verbleiben. Obwohl es sich im allgemeinen nur um geringe Mengen handelt, ist dieser Sachverhalt unerwünscht, sei es, daß dadurch die anwendungstechnischen Eigenschaften der Polymerisate oder Polymerisatlösungen beeinträchtigt werden oder die Polymerisate oder die Lösungen von Polymerisaten den Reinheitsanforderungen nicht genügen.

Der vorliegenden Erfindung lag daher die Bereitstellung von Polymerisaten und Lösungen von Polymerisaten als Aufgabe zugrunde, die aus ungesättigten Monomeren bei vorgegebenem mittlerem Molekulargewicht und ansonsten vorgegebenen Polymerisationsbedingungen durch radikalische Lösungspolymerisation unter Anwendung reduzierter Mengen radikalischer Polymerisationsinitiatoren erhältlich sind. Demgemäß wurde das eingangs definierte Verfahren gefunden.

Der vorgelegte flüssige Teil des Polymerisationsansatzes kann z.B. sowohl nur Lösungsmittel als auch Lösungsmittel und Monomere oder Lösungsmittel, Monomere und Polymerisationsinitiator umfassen. In der Regel wird er durch Rühren in Bewegung gehalten, wozu in an sich bekannter Weise Ankerrührer, Balkenrührer, Blattrührer, Fingerrührer, Gitterrührer, Kreiselrührer, Kreuzbalkenrührer, Schaufelrührer, Propellerrührer oder Impellerrührer eingesetzt werden.

Nicht vorgelegte Monomere und nicht vorgelegter Polymerisationsinitiator werden der Vorlage zweckmäßigerweise über getrennte Zuläufe zugeführt. Die Zufuhr kann sowohl in Substanz als auch in Lösung erfolgen, wobei die Zufuhr in Lösung bevorzugt wird. Dabei können die nicht vorgelegten Monomeren der Vorlage über einen Zulauf als Gemisch oder teilweise oder vollständig voneinander getrennt, gegebenenfalls zeitversetzt, über verschiedene Zuläufe zugeführt werden. Vorzugsweise befinden sich die Austrittsöffnungen aller Monomerenzuläufe unterhalb der Oberfläche des vorgelegten flüssigen Teils des Polymerisationsansatzes. Bemerkenswerterweise bedingt eine Anordnung der Austrittsöffnung des Initiatorzulaufs unterhalb der Oberfläche der flüssigen Vorlage eine Zusätzliche Reduktion der unter ansonsten vorgegebenen Polymerisationsbedingungen für ein vorgegebenes mittleres Molekulargewicht erforderlichen Menge an radikalischen Polymerisationsinitiatoren. Dies gilt insbesondere dann, wenn als Initiatoren Peroxide verwendet werden. Mit besonderem vorteil werden alle Zuläufe so zugeführt, daß sich ihre Austrittsöffnungen im Boden des Gefäßes befinden, in welchem die Lösungspolymerisation erfolgt. In der Regel handelt es sich um einen Polymerisationskessel eines Volumens von 10 l bis 20 m³, der mit einer Temperiervorrichtung, einem Rückflußkühler sowie für das Arbeiten unter Inertgasatmosphäre, erhöhtem oder reduziertem Druck ausgerüstet ist. Die Zuläufe können gekühlt oder beheizt sein. Um ein Verstopfen der Monomeren- und Initiatorzuläufe zu vermeiden, werden nach beendeter Monomeren- und Initiatorzufuhr die Zuläufe zweckmäpigerweise bis zum Ende der Polymerisation mit Lösungsmittel oder Inertgas wie Stickstoff gespült. Ansonsten wird die Lösungspolymerisation in an sich bekannter Weise durchgeführt, d.h. diskontinuierlich oder kontinuierlich, in der Regel bei Temperaturen von 20 bis 150°C sowie üblicherweise bei Drücken von 0,1 bis 100 bar und bis zu Monomerenumsätzen von über 80, bevorzugt über 90 Gew.-%. Die Lösungsmittelmenge beträgt zweckmäßigerweise, bezogen auf die Gesamtmenge der zu polymerisierenden Monomeren, 1 bis 200 Gew.-% und die in gleicher Weise bezogene Gesamtmenge an eingesetzten Polymerisationsinitiatoren beläuft sich normalerweise auf 0,1 bis 10 Gew.-%. Das Lösungsmittel verhält sich in der Regel indifferent und weist mit Vorteil einen Siedepunkt von 50 bis 150°C aus. Geeignet sind z.B. Kohlenwasserstoffe wie Benzol, Toluol, o-, m- und p-Xylole und Benzine. Ferner Alkohole wie Methanol, Ethanol, Propanol, Butanol oder Isobutanol sowie Ketone wie Aceton, Methylethylketon oder Methylisobutylketon aber auch Nitrile wie Acetonitril oder Benzonitril sowie Tetrahydrofuran, Essigsäureethylester oder Mischungen der genannten Lösungsmittel. Als Polymerisationsinitiatoren eignen sich z.B. Azoverbindungen wie 2,2'-Azobisisobutyronitril, 2,2'-Azobis(methylisobutyrat), 2,2'-Azobis(2,4-dimethylvaleronitril), 2,2'-Azobis(4-methoxy-2,4-dimethylvaleronitril), 2,2'-Azobis (N,N'-dimethylenisobutyramidin)dihydrochlorid, 2,2'-Azobis(2-amidinopropan)dihydrochlorid,, 4,4'-Azobis(4-cyanvaleriansäure), 2,2'-Azobis-(isobutyramid)dihydrat, sowie 2,2'-Azobis(2-methyl-N-[1,1-bis(hydroxymethyl)-2-hydroxyethyl]-propionamid. Weiterhin eignen sich Peroxide, z.B. Acylperoxide wie Benzoylperoxid, Dilauroylperoxid, Didecanoylperoxid, Isononanoylperoxid, Alkylperester wie tert.-Butylperpivalat, tert.-Butylper-2-ethylhexanoat, tert.-Butylpermaleinat, tert.-Butylperisononaoat, tert.-Butylperbenzoat, Dialkylperoxide wie Dicumylperoxid, tert.-Butylcumylperoxid, Di-tert.-butyl-peroxid, Peroxidicarbonate wie Dimistrylperoxidicarbonat, Dicetylperoxidicarbonat, Bis(4-tert.-butyl-cyclohexyl)-peroxidicarbonat, aber auch Polymerisationsinitiatoren wie 3,4-Dimethyl-3,4-diphenylhexan und 2,3-Dimethyl-2,3-diphenylbutan sowie Wasserstoffperoxid kombiniert mit Reduktionsmitteln. Die genannten Initiatoren können für sich allein oder kombiniert eingesetzt werden. Werden sie nicht vollständig vorgelegt, kann ihre Zufuhr kontinuierlich oder abschnittsweise erfolgen.

Als olefinisch ungesättigte Monomeren kommen unter anderen 3 bis 24 C-Atome aufweisende Ester monoethylenisch ungesättigter Carbonsäuren, insbesondere Ester der Acryl- und Methacrylsäure, in Betracht. Von besonderer Bedeutung sind dabei Methylacrylat, Ethylacrylat, n-Butylacrylat, n-Butylmethacrylat, iso-Butylacrylat, iso-Butylmethacrylat, iso-Amylacrylat, iso-Amylmethacrylat, 2-Ethylhexylacrylat, 2-Ethylhexylmethacrylat, iso-Octylacrylat, iso-Octylmethacrylat, n-Propylacrylat, iso-Propylacrylat, Methylmethacrylat, n-Decylacrylat, n-Decylmethacrylat, n-Dodecylacrylat sowie n-Dodecylmethacrylat. Ferner eignen sich α,β-mono-ethylenisch ungesättigte 3 bis 6 C-Atome enthaltende Mono- oder Dicarbonsäuren wie Acrylsäure, Methacrylsäure, Itaconsäure, Fumarsäure und Maleinsäure sowie die Anhydride monoolefinisch ungesättigter Dicarbonsäuren wie Maleinsäureanhydrid und Itaconsäureanhydrid. Außerdem kommen als olefinisch ungesättigte Monomere Amide wie Acrylamid, Methacrylamid, Tetrahydrofurfurylacrylamid, Tetrahydrofurfurylmethacrylamid, Diacetonacrylamid, Hydroxyalkylacrylate und -methacrylate wie 2-Hydroxyethylacrylat, 2-Hydroxyethylmethacrylat, 4-Hydroxybutylacrylat sowie 4-Hydroxybutylmethacrylat aber auch Monomere wie 2-Ketobutylacrylat, 2-Ketobutylmethacrylat, N-Vinylformamid, N-Vinylpyrrolidon, 2-Methylendioxepan-1,3, 2-Methylendioxolan-1,3, N-Methyl-2-methylenoxazolidin und 2-Methylenthiolen-1,3 in Betracht. Darüberhinaus können Monomere wie Acrolein, Methacrolein, Acetoacetoxyethylacrylat, Ethylen, Propylen, Isobuten, Butadien, Isopren, Vinylmethylether, Vinylisobutylether, Vinylpyridin, β-Aminoethylvinylether, Aminopentylvinylether, tert.-Butylaminoethylmethacrylat, Vinylaromaten wie Styrol oder Methylstyrole, Monomere wie Vinylcaprolactam, Tetrahydrofurfuryl-2-acrylat und Tetrahydrofurfuryl-2-methacrylat, sowie Vinylester von 1 bis 18 C-Atome aufweisenden Alkancarbonsäuren eingesetzt werden. Von besonderer Bedeutung sind ferner als olefinisch ungesättigte Monomere monoethylenisch ungesättigte Acetophenon- oder Benzophenonderivate, wie sie z.B. in der älteren Schrift P 4016056.4 beschrieben sind. Besonders bevorzugt werden dabei die Monomeren

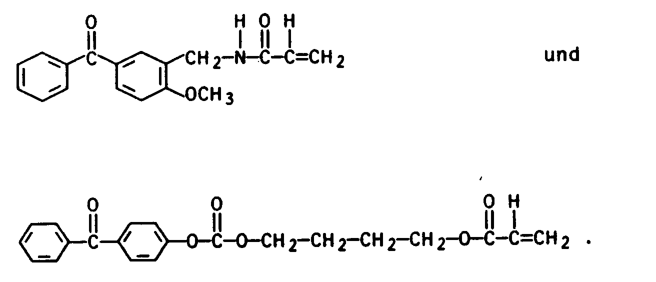

Die beispielhaft genannten olefinisch ungesättigten Monomeren können mit sich selbst oder im Gemisch polymerisiert werden. Selbstverständlich können Molekulargewichtsregler wie Mercaptoethanol, Marcaptobernsteinsäure, Mercaptoglycerin, Bromoform, oder Tetrachlorkohlenstoff mitverwendet werden. Das zahlenmittlere Molekulargewicht der erfindungsgemäß erhältlichen Polymerisate beträgt in der Regel 5·10² bis 5·10⁴. Bemerkenswerterweise weisen die erfindungsgemäß erhältlichen Lösungen von Polymerisaten aus olefinisch ungesättigten Monomeren im Vergleich zu Produkten herkömmlicher radikalischer Lösungspolymerisationsverfahren einen reduzierten Gehalt unerwünschter Gelkörper auf. In der Folge lassen sich mit den erfindungsgemäßen Lösungen von Polymerisaten aus olefinisch ungesättigten Monomeren ohne zusätzliches Abfiltrieren der gebildeten Gelkörper Verfilmungen erzielen, deren Erscheinungsbild erhöhte Ruhe aufweist.

Von besonderem Vorteil sind Polymerisate und Lösungen von Polymerisaten, die in erfindungsgemäßer Weise aus olefinisch ungesättigten Monomeren der Zusammensetzung
A) 20 bis 100 Gew.-%, insbesondere 20 bis 99,95 Gew.-%, wenigstens eines Acryl- und/oder Methacrylsäureesters eines 1 bis 18 C-Atome enthaltenden aliphatischen Alkohols,
B) 0 bis 15 Gew.-%, insbesondere 0,05 bis 15 Gew.-%, wenigstens eines monoethylenisch ungesättigten Acetophenon- und/oder Benzophenonderivates, das keine Phenylgruppe mit einer freien Hydroxylgruppe in ortho-Position zur Carbonylgruppe des Phenongrundkörpers aufweist,
C) 0 bis 10 Gew.-% wenigstens einer 3 bis 12 C-Atome enthaltenden monoethylenisch ungesättigten ein- und/oder zweibasischen Säure und/oder deren Anhydriden und
D) 0 bis 80 Gew.-%, insbesondere 0 bis 60 Gew.-%, sonstige olefinisch ungesättigte Monomere,
   hergestellt werden und bei 25°C in Tetrahydrofuran (THF) vorzugsweise einen K-Wert von 10 bis 120 aufweisen. Der K-Wert ist eine relative Viskositätszahl, die in Analogie zur DIN 53 726 bestimmt wird. Er enthält die Fließgeschwindigkeit einer 1 gew.-%igen Lösung des Polymerisats in THF und charakterisiert das mittlere Molekulargewicht des Polymerisats. Je kleiner der K-Wert, desto kleiner das mittlere Molekulargewicht.

Als Basis für UV-vernetzbare Haftklebstoffe sind insbesondere Polymerisate und Lösungen von Polymerisaten der oben genannten Monomerenzusammensetzung geeignet. Besonders bevorzugt sind solche, welche einen Gehalt an Monomeren B) aufweisen. Im Vergleich zu Polymerisaten oder Lösungen von Polymerisaten, die aus Monomeren derselben Zusammensetzung in herkömmlicher Weise durch Lösungspolymerisation hergestellt werden, ergeben die erfindungsgemäß hergestellten Polymerisate, bzw. deren Lösungen bei gleichem mittlerem Molekulargewicht Verklebungen mit erhöhter Scherstandfestigkeit sowie Schälfestigkeit.

Vergleichsbeispiel V und erfindungsgemäße Beispiele B

### a) Herstellung

V: Ein Gemisch aus 15 kg Toluol, 0,1 kg tert.-Butyl-per-2-ethylhexanoat sowie 5,0 kg einer Monomerenmischung aus 50 kg n-Butylacrylat, 29 kg 2-Ethylhexylacrylat, 18,5 kg Methylacrylat, 2,5 kg Acrylsäure und 0,65 kg des Monomeren 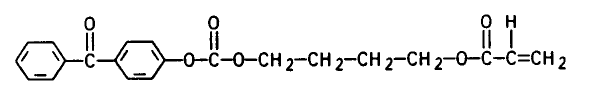 wurde in einem Polymerisationskessel 10 min auf die Polymerisationstemperatur von 80°C erhitzt und anschließend im Verlauf von 5 h unter Aufrechterhaltung der Polymerisationstemperatur mit der restlichen Monomerenmischung und parallel dazu im Verlauf von 3 h über einen getrennten Zulauf mit einer Lösung von 1,9 kg tert.-Butyl-per-2-ethylhexanoat in 10 kg Toluol kontinuierlich versetzt, wobei sich sowohl die Austrittsöffnung des Monomerenzulaufs als auch des Initiatorzulaufs unmittelbar unterhalb des Kesseldoms befand. Danach wurde noch 4 h bei 117°C nachpolymerisiert und so die Lösung eines Copolymerisats mit einem K-Wert von 42,2 (25°C, THF) erhalten.
B1: Wie V, die Austrittsöffnung des Monomerenzulaufs befand sich jedoch im Boden des Polymerisationskessels. Es wurde so die Lösung eines Copolymerisats mit einem K-Wert von 33,0 (25°C, THF) erhalten.
B2: Wie B1, die nachträglich zugeführte Menge an tert.-Butyl-per-2-ethylhexanoat betrug jedoch nur 1,5 kg. Es wurde so die Lösung eines Copolymerisats mit einem K-Wert von 35,4 (25°C, THF) erhalten.
B3: Wie B1, die nachträglich zugeführte Menge an tert.-Butyl-per-2-ethylhexanoat betrug jedoch nur 1,0 kg. Es wurde so die Lösung eines Copolymerisats mit einem K-Wert von 39,3 (25°C, THF) erhalten.
B4: Wie B1, die nachträglich zugeführte Menge an tert.-Butyl-per-2-ethylhexanoat betrug jedoch nur 0,5 kg. Es wurde so die Lösung eines Copolymerisats mit einem K-Wert von 43,0 (25°C, THF) erhalten.
B5: Wie B1, die nachträglich zugeführte Menge an tert.-Butyl-per-2-ethylhexanoat betrug jedoch nur 0,45 kg und die Austrittsöffnung des Initiatorzulaufs befand sich ebenfalls im Boden des Polymerisationskessels. Es wurde so die Lösung eines Copolymerisats mit einem K-Wert von 43,1 erhalten.

### b) Beurteilung des Gehalts an gebildeten Gelkörpern (Stippen)

I. Zur Beurteilung des Gelkörpergehalts wurden die Lösungen V sowie B1 bis B5 in einer Trockenschichtdicke von 0,02 mm auf eine Glasplatte aufgetragen. Anschließend wurde die Stippenbildung visuell beurteilt. Die Ergebnisse enthält Tabelle 1.

**Tabelle 1**

| verwendete Lösung | Stippenbild |
|---|---|
| V | sehr viele, relativ große Stippen |
| B1 | wenige Stippen |
| B2 | wenige kleine Stippen |
| B3 | einzelne Stippen |
| B4 | einzelne kleinste Stippen |
| B5 | keine Stippen |

II. Für eine weitere Beurteilung der Gelkörperbildung wurde von den Lösungen V, B1, B4 und B5 das Lösungsmittel jeweils destillativ abgetrennt und mit den lösemittelfreien Polymerisaten bei 120°C (aus der Schmelze) bei einer Gesamtauftragsmenge von 25 g/m² eine Polyesterfolie beschichtet. Das Beschichtungsbild wurde visuell auf Stippen und Riefen (Streifen) untersucht. Das Ergebnis zeigt Tabelle 2.

**Tabelle 2**

| Polymerisat aus Lösung | Ergebnis |
|---|---|
| V | Streifen aufweisende Beschichtung, kleine und große Stippen |
| B1 | keine Streifen, wenige Stippen |
| B4 | keine Streifen, keine Stippen |
| B5 | keine Streifen, keine Stippen |

### c) Anwendungstechnische Prüfung als Haftkleber

Zur Herstellung von Prüfstreifen wurde jeweils eine Polyesterfolie bei 120°C mit 25 g/m² der lösemittelfreien Polymerisate aus den Lösungen V und B4 beschichtet. Anschließend wurde die beschichtete Polyesterfolie mit einer Geschwindigkeit von 20 m/min im Abstand von 10 cm unter zwei hintereinander (im Abstand von 11 cm) angeordneten Quecksilbermitteldruckstrahlern (120 W/cm) durchgeführt. Die Bestrahlungsbedingungen wurden durch Einschalten nur eines (A) oder beider (B) Strahler variiert. Aus den so erhaltenen selbstklebenden Folien wurden Streifen von 2 cm Breite und 30 cm Länge ausgeschnitten und auf einer Länge von 2,5 cm, unter Anwendung eines Gewichtes der Masse 2,5 kg, auf eine verchromte Messingplatte aufgerollt und 24 h bei 23°C und 65 % relativer Luftfeuchtigkeit gelagert. Anschließend wurde das nicht behaftete Ende der Messingplatte zwischen 2 Klemmbacken befestigt und das gegenüberliegende überstehende Klebeband frei hängend bei Temperaturen von 23 und 50°C mit einem Gewicht der Masse 1 bzw. 2 kg belastet. Maßstab für die Scherstandfestigkeit ist die Zeitdauer bis zum Ablösen des Prüfstreifens. Die Prüfwerte zeigt Tabelle 3. Zur Bestimmung der Schälfestigkeit wurden die Prüfstreifen parallel zur Klebschicht mit einer Geschwindigkeit von 300 mm/min rückwärts vom Substrat abgezogen und die hierfür erforderliche Kraft gemessen. Die Ergebnisse zeigt ebenfalls Tabelle 3.

**Tabelle 3**

| Polymerisat aus Lösung | Bestrahlungsbedingung | Scherstandfestigkeit [h] | | Schälfestigkeit [N/2 cm] |
|---|---|---|---|---|
| | | 2 kg, 23°C | 1 kg, 50°C | |
| V | A | 11 | 22 | 6,8 |
| B4 | A | >24 | >24 | 8,8 |
| V | B | - | - | 7,3 |
| B4 | B | - | - | 9,4 |

## Patentansprüche

1. Verfahren zur Herstellung von Polymerisaten aus olefinisch ungesättigten Monomeren sowie Lösungen von Polymerisaten aus olefinisch ungesättigten Monomeren, dadurch gekennzeichnet, daß man die olefinisch ungesättigten Monomeren in Gegenwart von radikalbildenden Initiatoren in Lösung bei ansonsten vorgegebenen Polymerisationsbedingungen so polymerisiert, daß man ein Lösungsmittel und/oder einen flüssigen Teil einer oder mehrerer Reaktionskomponenten des Polymerisationsansatzes vorlegt, auf die Polymerisationstemperatur erhitzt und unter Aufrechterhaltung oder Start der Polymerisation über wenigstens einen Zulauf einen Teil oder die Gesamtmenge der zu polymerisierenden Monomeren dem in Bewegung gehaltenen Teil des Polymerisationsansatzes so zuführt, daß sich die Austrittsöffnung des wenigestens einen Zulaufs unterhalb der Oberfläche des vorgelegten Teils des Polymerisationsansatzes befindet.

2. Verfahren nach Anspruch 1, dadurch gekennzeichnet, daß man auch die dem vorgelegten Teil des Polymerisationsansatzes zuzuführenden Initiatoren so zuführt, daß sich die Austrittsöffnung des wenigstens einen Initiatorzulaufs unterhalb der Oberfläche des Polymerisationsansatzes befindet.

## Claims

1. A process for the preparation of a polymer of olefinically unsaturated monomers or a solution of this polymer, wherein the olefinically unsaturated monomers are polymerized in the presence of a free radical initiator in solution under polymerization conditions which are otherwise predetermined, in such a way that a solvent and/or a liquid part of one or more reactants of the polymerization batch are initially taken and heated to the polymerization temperature, and some or the total amount of the monomers to be polymerized is fed to the agitated part of the polymerization batch via one or more feeds, with maintenance or initiation of the polymerization, in such a way that the outlet orifice of the one or more feeds is located below the surface of the initially taken part of the polymerization batch.

2. A process as claimed in claim 1, wherein the initiators to be added to the initially taken part of the polymerization batch are also introduced in such a way that the outlet orifice of the one or more initiator feeds is located below the surface of the polymerization batch.

## Revendications

1. Procédé de préparation de polymères constitués de monomères à insaturation oléfinique, ainsi que de solutions de polymères constitués de monomères à insaturation oléfinique, caractérisé en ce que l'on polymérise en solution les monomères à insaturation oléfinique en présence d'amorceurs radicalaires dans les conditions de polymérisation précédemment mentionnées, de sorte que l'on introduit au préalable un solvant et/ou une fraction liquide d'un ou plusieurs composants réactionnels de la charge de polymérisation, on chauffe jusqu'à la température de polymérisation et on introduit, par au moins une alimentation, une partie ou la totalité de la quantité de monomères à polymériser dans la fraction de la charge de polymérisation maintenue en mouvement, tout en commençant ou en maintenant la polymérisation l'orifice de sortie de ladite alimentation se trouvant sous la surface de la fraction de la charge de polymérisation déposée au préalable.

2. Procédé selon la revendication 1, caractérisé en ce que l'on ajoute aussi les amorceurs à la fraction de la charge de polymérisation déposée au préalable, l'orifice de sortie d'au moins une alimentation en amorceur se trouvant sous la surface de la charge de polymérisation.
